# EUROPEAN PATENT SPECIFICATION

(11) **EP 2 341 664 B1**
(45) Date of publication and mention of the grant of the patent: **18.09.2013**
(21) Application number: 09016109.2
(22) Date of filing: 30.12.2009
(51) Int. Cl.: H04L 12/403, H04L 12/24, H04L 12/10, H04W 84/18

(54) **Method and system for networking**
Vernetzungsverfahren und -system
Procédé et système de réseau

(43) Date of publication of application: 06.07.2011
(73) Proprietor: Raymarine UK Limited, Fareham PO15 5RJ (GB)
(72) Inventor: Johnson, Mark, 56610 Arradon (FR); Hodgson, Chris, 56880 Ploeren (FR); Ekoue, Bertrand, 56230 Queetembert (FR)
(74) Representative: Calderbank, Thomas Roger

(56) References cited:
- US-A1- 2003 114 898
- US-A1- 2006 244 624
- US-A1- 2009 315 668
- DU ET AL: "Safari: A self-organizing, hierarchical architecture for scalable ad hoc networking" AD HOC NETWORKS, ELSEVIER, vol. 6, no. 4, 20 February 2008 (2008-02-20), pages 485-507, XP022492474 ISSN: 1570-8705
- NAKJUNG CHOI ET AL: "Random and linear address allocation for mobile ad hoc networks" WIRELESS COMMUNICATIONS AND NETWORKING CONFERENCE, 2005 IEEE NEW ORLEANS, LA, USA 13-17 MARCH 2005, PISCATAWAY, NJ, USA,IEEE, vol. 4, 13 March 2005 (2005-03-13), pages 2231-2237, XP010791525 ISBN: 978-0-7803-8966-3

## Description

The present invention relates to a networking method, according to the preamble of Claim 1.

The invention also relates to a system.

In prior art solutions networking different wireless elements has been either burdensome because of all security measures in connection with the networking or alternatively security issues have been compromised.

US-A-2006/0244624 discloses a radio frequency networked lighting control system in which slave elements are configured for a network master control unit. The disclosure discusses situations in which a slave element may become the network master unit without reconfiguring the network.

US-A-2003/0114898 discloses a telemetry system in which radio frequency circuitry is maintained in a powered down state until, at synchronised intervals, a device designated as a master device powers up to request a communications session and slave devices power up to listen to that request.

Networking together elements of a radio network generally requires user intervention such as keying in a common key, switching "DIP" switches to the same point, or being in close proximity during a networking phase. These solutions all require user input, and often require users to refer to user guides. This introduces problems of user frustration and user error and can lead to incorrect networking, with too few or too many nodes joining a network.

The invention is intended to eliminate at least some drawbacks of the prior art disclosed above and for this purpose create an entirely new type of method and system for networking devices.

The invention is based on resolving the above problem for instances where radio nodes share a common power supply, e.g. the nodes on a boat which are wired to the same fuse/breaker. A networking event is triggered when a radio node powers up from an external supply at exactly the moment as another radio node. From this, as the result of power-up radio communications, the nodes conclude they are wired to the same breaker, and they become part of the same network, e.g. by sharing a network address.

For this to work, the radio protocol needs a mechanism where one radio node acts as the network Master and starts other nodes with a start signal. Nodes which see the start signal immediately on booting up from the arrival of external power can interpret this "start signal arrival just at the moment of boot up" to be a Networking event, and join the network of the Master.

The invention is further preferably implemented in such a way that only a certain time window is allowed for the slave nodes to network with the master node.

According to a first aspect of the invention there is provided a networking method according to claim 1.

According to a second aspect of the invention there is provided a networking system according to claim 12.

The networking method and the Networking system of the invention may also be associated with any of the following features according to the dependent claims.
one of the nodes acts as a master node and the start signal is triggered by the switching on of the power source.
one of the nodes which produces a first signal to the network sends the start signal and other nodes take its network address if the power up timing is essentially the same.
one of the nodes which produces a first measurement to the network sends the start signal and other nodes take its network address if the power up timing is essentially the same.
one of the nodes which produces a first signal during the manual network start sends the start signal and other nodes take its network address if the power up timing is essentially the same.
one of the nodes produces a first random start signal and other nodes take its network address if the power up timing is essentially the same.
the Networking nodes take the master node's network address as their own network address.
means are provided for a further step, where a non master node networked with a battery operated node becomes a master node at the next switching on of the power source.
• the time window is about 1 ― 6000 ms, preferably around 300 ms after the start pulse.
• an ending of the start pulse is considered as any subsequent event proportional to the time when the actual start signal is complete.
• the time window is formed at the end of the start signal such that the allowed time window for networking starts from the power up added by power up time, signal sending time and end of the start signal time and ends after the predetermined time window after the end of the end of the start signal.

Considerable advantages are gained with the aid of the invention.

The invention allows easy assembly of several network nodes with sufficient safety. The invention is especially advantageous in boat and car solutions, where the network consists of only few nodes powered from the same battery and the network works based on short range transmission.

Further, networking event can be triggered without user intervention, if two or more radio enabled nodes see a power up event at the same moment in time. By the networking in accordance with the invention it is possible to automatically accept the network address of another node who shares the same power supply.

When mixing by 12V cable powered and independently battery powered nodes, networking can still be made to work. This requires the network address of the battery nodes i.e. nodes without power supply timing information to dominate, so that the powered nodes move to the network address of independently powered nodes.

In the following, the invention is examined with reference to the accompanying drawings.
Figure 1 shows one network configuration according to the invention.
Figure 2a shows graphically a timing diagram of the system according to the invention.
Figure 2b shows in more detail the timing diagram of figure 2a of the system according to the invention.
Figure 3 shows another network configuration according to the invention.
Figure 4 shows graphically another timing diagram of the system according to the invention.
Figure 5 shows graphically another timing diagram of the system according to the invention.

### System Overview where all nodes are wired to a common breaker

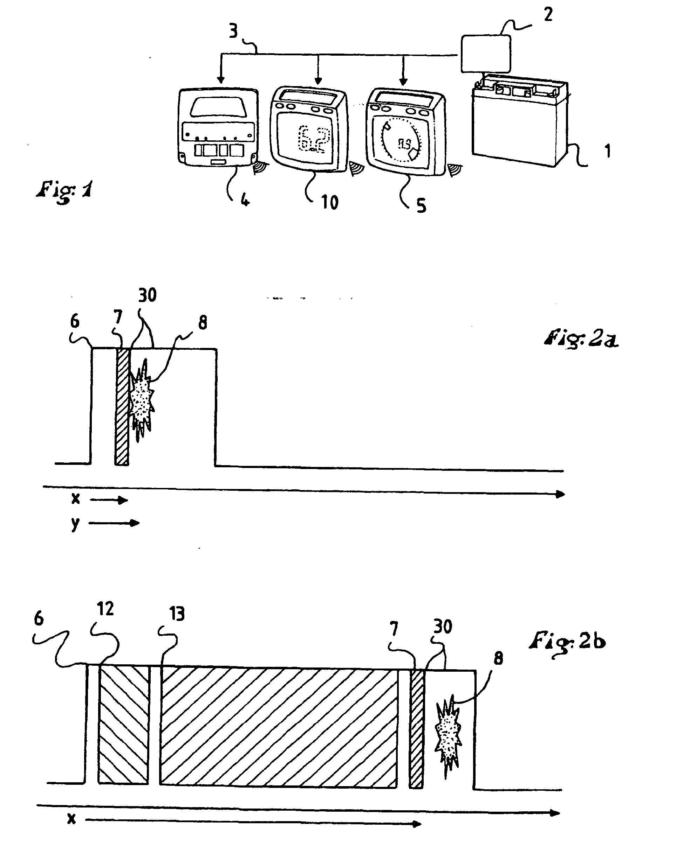

In the system of figure 1, three nodes 4, 10 and 5 have just been wired 3 to a common power supply 1 and the circuit breaker 2 is about to be made for the first time.

Each node 4, 10 and 5 has a wireless transceiver, allowing communication between each element, and each node 4, 10 and 5 has a unique network address given to it by the factory.

Because the nodes 4, 10 and 5 do not share the same network address initially, they do not communicate data with each other and do not appear to be part of the same network.

One of the nodes (e.g. node 5) has been set by the installer as the system Master, which means it will attempt to bring other nodes 4 into a network automatically as part of its boot up process. The other nodes 4 are called slave nodes.

Referring also to figure 2a, just after the power up 6, when the circuit breaker 2 is made and the onboard micro controller's reset is released, the Master 5 issues a start signal 7 or special flag indicating first communication by the Master 5 since boot up. The start signal 7 from master Node 5 has a fixed known delay x. At time y both slave nodes 4 and 10, on seeing the start signal within 300ms time window 30 of their own power up, will join 8 the Master's 5 network by taking its network address as their own network address. This process of taking on the Master's network address may be called FlashNetworking.

If the start signal 7 is seen later than this 300ms cut-off from the power up 6, then it is assumed to be start signal from another network, i.e. the nodes are not wired to the same breaker and the Flashnetworking event does not arise.

All three nodes 4, 10 and 5 now share the same network address and so full networking behaviour arises for the remainder of the session.

The network address can be retained permanently by the slave nodes 4 and 10. In this case, future power up events will not generate further Flahsnetworking events, the slave nodes 4 and 10 will automatically recognize the network address of the master 5 and immediately communicate as part of a single network. This is the preferred implementation.

Alternatively the network address could be reset on power down, in which case a Flashnetworking event would be triggered on each subsequent power cycle.

The 300 ms precision for cut-off time window 30 is a compromise, suited to this application. A shorter duration would reduce the risk that another network in range is, by chance, started at almost the same instant in time, causing two separately wired networks to accidentally become merged. A longer duration would make the system easier to implement, as timing x is measured by clocks, which have limited accuracy. In our system, x is 8 seconds after the breaker is made, and y is 5 to 20 ms later than x, depending on the network loading.

In accordance with figure 2b line x represents the time taken to complete the issuance of the starting signal, the area 7 which takes typically 3 ms.

The time x includes typically following events: power up time 12, signal sending time 13 and end signal 7 for start pulse.

If the end of start signal 7 of any other nodes is within the predetermined time window 30, in other words in a window in which the time from the power up 6 is at least x but less than x + 300ms, the networking happens.

Large area 13 represents the start signal which is a series of 10101010 lasting typically 6s.

Area 12 close to the power up 6 is the warm up time for the crystals of the nodes 4, 10, and 5. This area 12 represents a changeover from the low precision internal chip resonator to the high precision external watch crystal, and this changeover time 12 takes about 2s (±150ms)

The time duration of the areas 13 and 7 is known and precise to microseconds. However, the changeover time 12 is dependent on the watch crystal characteristics, the temperature and the system battery voltage in the case of a battery powered unit. This is why in the embodiment in accordance with the invention is left a 300 ms tolerance on comparisons of elapsed times.

### System Overview where some nodes are wired and others are battery powered

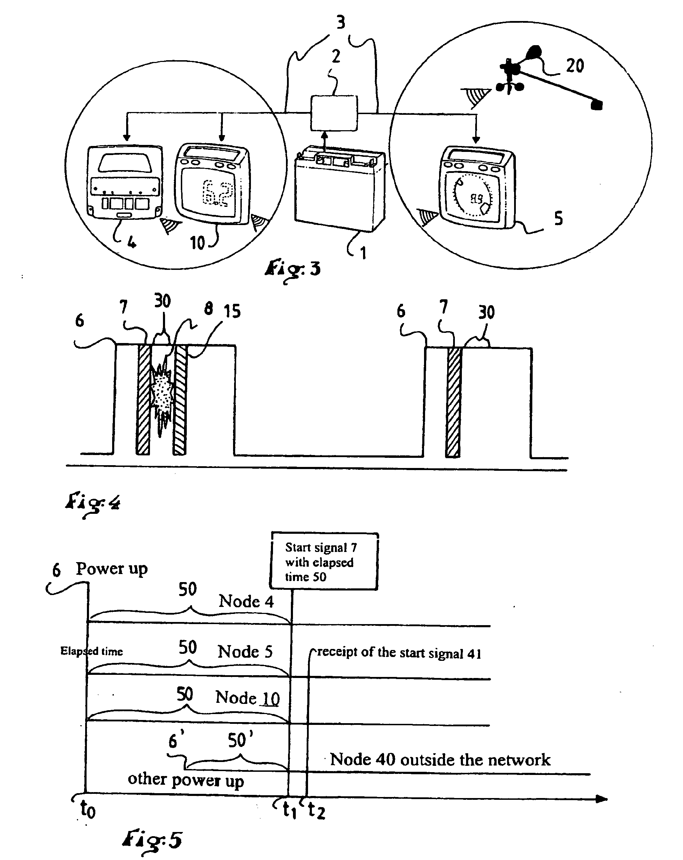

In the example of figure 3 nodes, a wind display 5 and a wind sensor 20 already share the same network address i.e. are networked already. Two more nodes 4 and 10 have just been wired to the same circuit, a hull transmitter and a speed display and the breaker 2 is about to be made.

Each node 4, 5, 20 contains a wireless transceiver, allowing communication with the other nodes. The Hull transmitter 4 and Speed display 10 may have a unique network address, or may already be networked, i.e. share their own network address, different to the wind nodes.

The breaker 2 is made and power arrives simultaneously at all three 12V powered nodes 4, 10 and 5 for the first time. There are three alternative solutions:
1. If the wind display 5 is configured to be the network Master, then hull transmitter 4 and speed display 10 will Flashnetwork independently and Flashnetworking is complete. All nodes share the wind network address and are all now part of the same network. If one of the new nodes like hull transmitter 4 or speed display 10 is configured to be the network Master, then the wind display 5 may Flashnetwork, but this must not be unilateral, or it will leave the wind transmitter 20 left alone on its existing network address, because the wind transmitter cannot Flashnetwork as it has no visibility of the 12V breaker 2. After Flashnetworking, on first power cycle the wind display 5 therefore requests by signal 15 (Fig. 4) that other nodes "join its network at the next power up", knowing that it had a battery devices 20 already networked in its previous power cycle. At the next power on cycle, all units 4, 10 and 5 then cleanly power up, having adopted the address of the existing wind network 20 and 5.
2. If none of the displays 4, 10 and 5 is configured to be the network master, then Flashnetworking won't happen and the user will be left with the existing network and new nodes 4 and 10 operating separately. The user will need to configure one of the displays to be Master. In the applicant's case, the user is encouraged to do this, because setting one display to Master gives an automatic network start up feature when the breaker is made.

In conclusion and referring to figures 3 and 4 in the case of networking in the context of applicant's Micronet solution where nodes powered by 12V can be mixed with independent battery powered radio nodes, the following additional tests may be required:
The node 4, 5 checks whether it has battery powered units already logged into its own network:
   - If the node has not previously been linked to battery powered units, then it is free to take the address of the Master and Flashnetworking is complete. Other nodes, which have previously been linked to, will independently come to the same conclusion and will themselves Flashnetwork to the Master.
   - If a node 5 has previously been networked to battery powered units then these units will not be able to perform Flashnetworking as they don't know about the timing of the 12V breaker being made. Therefore the node 5 can take the address of the Master for this session only, i.e. it must put into Flash memory its original Micronet address for recovery at the next power up 6. It must then issue a Flashenlist instruction 15 containing its original network address, so that the Master and other nodes on the Master's network can store the address in non-volatile memory. At the next power cycle 6, in other words the next time the 12V breaker 2 is engaged, all units will then start on the network address of the node 5 which had battery power units 20 in its network and all nodes including battery nodes which can't directly Flashnetwork will be sharing the same network address and will be networked.

### Alternative solutions for a system using master node

In some embodiments, it may not be convenient to rely on a system master to produce a timing "Master strobe" which other nodes can recognize and Flashnetwork to. Many other mechanisms could be envisaged in accordance with the invention, for example in accordance with figure 5:
1. A node 4 could unilaterally communicate because for example it has completed its first measurement of a parameter such as a heartbeat interval, a cadence interval, a wind speed etc. Embedded in this communication 7 could be an "elapsed time" 50 since start up 6 which could for example be measured in microseconds. Any other node 5 or 10 seeing this first communication 7 would compare the time elapsed 50 with its own 50. On finding the two elapsed times to be matching (to within the measurement precision of the clocks in the embodiment), the Node 5 or 10 could unilaterally flashnetwork with the first communicating node 4, by absorbing its network address. Multiple nodes would unilaterally Flashnetwork simultaneously because they all see this first communication and all compare elapsed times in the same way. Node 40 having different elapsed time 50' will not network. The time between receipt of signal 41 and sending of it (t₂-t₁) can be easily taken into account, because this time is accurately enough fixed. For example time t₂-t₁ may be subtracted from the elapsed time 50 of the receiving nodes 5 and 10 or alternatively the sending node 4 may add time t₂-t₁ to its elapsed time 50 to make the times 50 comparable with sending 4 and receiving nodes 5 and 10. The evaluation of elapsed time 50 can be considered using a time window for acceptance of a start signal 7 in accordance with the invention. In other words, only such nodes 5 and 10 receiving a start signal powered within the same time window (elapsed time 50) will be accepted to the network.
2. As above, but the first communication could arise from a user activity such as manually turning the network on. This would avoid the user having to set Master On, or the network having to have a formally defined Master node.
3. There could be an "other nodes discovery" mechanism where at a random time, a specific message is issued by each Node, indicating its network address and elapsed time. Other nodes, on hearing this, would compare with their elapsed times and Flashnetwork if there is a match. There would be risk of message collision if two or more Nodes happened to issue their messages simultaneously, but this would eventually resolve itself if random backoff and retransmit were employed, or if the message was repeated a number of times with random delays between each repetition.

In accordance with the invention an ending or the start puise 7 is considered as any subsequent event proportional to the time when the actual start signal 12, 13, 7 is complete. In other words the time window may be deleted by a constant time or a known variable for the other nodes 4, 10 or 5.

As a summary
1) The networking in accordance with the invention, Flashnetworking can arise when a Node 4, 10, 5 sees a start signal 7 with the expected elapsed time since power up 6. This requires one node 4, 10 or 5 to issue a start signal 7, and other nodes to compare elapsed time with expected elapsed time for nodes wired to the same breaker 2.
2) Networking can arise at any time after power up 6, if transmissions contain elapsed time information, so that receiving nodes can compare the sender's view of elapsed time with their own; a match to within 300ms (or other figure) can instigate flashnetworking.
3) That merging of 2 nodes, one containing battery powered nodes can live in harmony with flashnetworking even though battery nodes can't measure elapsed time. This is achieved with a mechanism where the network containing battery nodes sends out a "network to me" message 15, so that at the next power up, all nodes log onto the battery node network.

## Claims

1. A networking method including the following steps:
networking at least two wirelessly communicating nodes (4, 5, 10) sharing a common power source (1), **characterized in that**:
a first one of the nodes (5) sends a first start signal (12, 13, 7) triggered by a switching on of the common power source (1) at a power up time (6), or sends after the power up time (6) a second start signal (7) including at least information indicating an elapsed time (50) from the power up time (6) as tracked by the first node, and
a second one of the nodes (4, 10) networks with the first node (5) if the first start signal (7) is received within a predefined time window (30) from the power up time (6) of the common power source (1), or if the second start signal (7) is received after the power up time (6), where an elapsed time (50) from the power up time (6) as tracked by the second node matches that indicated in the second start signal (7).

2. A method in accordance with claim 1, **characterized in that** one of the nodes (4, 10 or 5) acts as a master node.

3. A method in accordance with claim 1, **characterized in that** the first node (5) sends the first or second start signal before start signals are sent by the other nodes.

4. A method in accordance with claim 3, **characterized in that** the first node (5) provides a first measurement to the network.

5. A method in accordance with claim 3, **characterized in that** the first node sends the first or second start signal in response to a manual start of the network.

6. A method in accordance with claim 3, **characterized in that** the second start signal (7) is a random start signal (7).

7. A method in accordance with any previous claim, **characterized in that** the second node (4, 10) takes the first node's (5) network address as its own network address.

8. A method according to any previous Claim, **characterized in that** it includes a further step, where a non master node (5) networked with a battery operated node becomes a master node at a next switching on (6) of the common power source.

9. A method according to any previous Claim, **characterized in that** the predefined time window (30) is about 1 - 6000 ms, preferably around 300 ms after the first start signal (7).

10. A method according to any previous Claim, **characterized in that** an end of the first start signal (7) is considered as any subsequent event proportional to the time when the actual first start signal (12, 13, 7) is complete.

11. A method according to any previous Claim, **characterized in that** the predefined time window (30) is formed at the end of the first start signal (7).

12. A networking system including means for:
networking at least two wirelessly communicating nodes (4, 5, 10) sharing a common power source (1), **characterized in that** it further includes
a first one of the nodes (5) being capable of sending a first start signal (12, 13, 7) triggered by a switching on of the common power source (1) at a power up time (6), or sending after the power up time (6) a second start signal (7) including at least information indicating an elapsed time (50) from the power up time (6) as tracked by the first node, and
a second one of the nodes (4, 10) being capable to network with the first node (5) if the first start signal (7) is received within a predefined time window (30) from the power up time (6) of the common power source (1), or if the second start signal (7) is received after the power up time (6), where an elapsed time (50) from the power up time (6) as tracked by the second node matches that indicated in the second start signal (7).

13. A system in accordance with claim 12, **characterized in that** one of the nodes (4, 10 or 5) is selected as a master node.

14. A system in accordance with claim 12, **characterized in that** the first node (5) sends the first or second start signal before start signals are sent by the other nodes.

15. A system in accordance with claim 14, **characterized in that** the first node (5) provides a first measurement to the network.

16. A system in accordance with claim 14, **characterized in that** the first node sends the first or second start signal in response to a manual start of the network.

17. A system in accordance with claim 14, **characterized in that** the second start signal (7) is a random start signal (7).

18. A system in accordance with any previous claim, **characterized in that** the second node (4, 10) takes the first node's (5) network address as its own network address.

19. A system according to any previous Claim, **characterized in that** it includes means for a further step, where a non master node (5) networked with a battery operated node becomes a master node at a next switching on (6) of the common power source.

20. A system according to any previous system Claim, **characterized in that** the predefined time window (30) is about 1 - 6000 ms, preferably around 300 ms after the first start signal (7).

## Patentansprüche

1. Vernetzungsmethode, die folgende Schritte umfasst:
Vernetzen von mindestens zwei drahtlos kommunizierenden Knoten (4, 5, 10), die eine gemeinsame Spannungsquelle (1) haben, **dadurch gekennzeichnet, dass**
ein erster der Knoten (5) ein erstes Startsignal (12, 13, 7) aussendet, das durch Einschalten der gemeinsamen Spannungsquelle (1) zu einem Hochlaufzeitpunkt (6) ausgelöst wird, oder nach dem Hochlaufzeitpunkt (6) ein zweites Startsignal (7) aussendet, das zumindest Information über eine seit dem Hochlaufzeitpunkt (6) vergangene Zeitspanne (50) enthält, die vom ersten Knoten verfolgt wird, und
ein zweiter der Knoten (4, 10) sich mit dem ersten Knoten (5) vernetzt, wenn das erste Startsignal (7) innerhalb eines vorbestimmten Zeitfensters (30) ab dem Hochlaufzeitpunkt (6) der gemeinsamen Spannungsquelle (1) empfangen wird, oder wenn das zweite Startsignal (7) nach dem Hochlaufzeitpunkt (6) empfangen wird, wobei eine seit dem Hochlaufzeitpunkt (6) vergangene Zeitspanne (50), die vom zweiten Knoten verfolgt wird, mit der im zweiten Startsignal (7) angezeigten übereinstimmt.

2. Verfahren nach Anspruch 1, **dadurch gekennzeichnet, dass** einer der Knoten (4, 10 oder 5) als Master-Knoten fungiert.

3. Verfahren nach Anspruch 1, **dadurch gekennzeichnet, dass** der erste Knoten (5) das erste oder zweite Startsignal aussendet, bevor von den anderen Knoten Startsignale ausgesandt werden.

4. Verfahren nach Anspruch 3, **dadurch gekennzeichnet, dass** der erste Knoten (5) dem Netzwerk eine erste Messung bereitstellt.

5. Verfahren nach Anspruch 3, **dadurch gekennzeichnet, dass** der erste Knoten das erste oder zweite Startsignal als Antwort auf einen manuellen Start des Netzwerks aussendet.

6. Verfahren nach Anspruch 3, **dadurch gekennzeichnet, dass** ein zweites Startsignal (7) ein Zufallsstartsignal (7) ist.

7. Verfahren nach einem der vorangegangenen Ansprüche, **dadurch gekennzeichnet, dass** der zweite Knoten (4, 10) die Netzwerkadresse des ersten Knotens (5) als seine eigene Netzwerkadresse übernimmt.

8. Verfahren nach einem der vorangegangenen Ansprüche, **dadurch gekennzeichnet, dass** das Verfahren einen weiteren Schritt umfasst, bei dem ein mit einem batteriebetriebenen Knoten vernetzter Knoten (5), der kein Masterknoten ist, beim nächsten Einschalten (6) der gemeinsamen Spannungsquelle zum Masterknoten wird.

9. Verfahren nach einem der vorangegangenen Ansprüche, **dadurch gekennzeichnet, dass** das vorbestimmte Zeitfenster (30) ungefähr 1 - 6000 ms, vorzugsweise rund 300 ms, nach dem ersten Startsignal (7) beträgt.

10. Verfahren nach einem der vorangegangenen Ansprüche, **dadurch gekennzeichnet, dass** das Ende des ersten Startsignals (7) als jedes Folgeereignis zu betrachten ist, das proportional zu der Zeit ist, in der das aktuell erste Startsignal (12, 13, 7) abgeschlossen ist.

11. Verfahren nach einem der vorangegangenen Ansprüche, **dadurch gekennzeichnet**, das vorbestimmte Zeitfenster (30) am Ende des ersten Startsignals (7) gebildet wird.

12. Vernetzungssystem, das Mittel für Folgendes umfasst:
Vernetzen von mindestens zwei drahtlos kommunizierenden Knoten (4, 5, 10), die eine gemeinsame Spannungsquelle (1) haben, ferner **dadurch gekennzeichnet, dass** es Folgendes umfasst:
einen ersten der Knoten (5), der in der Lage ist, ein erstes Startsignal (12, 13, 7) auszusenden, das durch das Einschalten der gemeinsamen Spannungsquelle (1) zu einem Hochlaufzeitpunkt (6) ausgelöst wird, oder nach dem Hochlaufzeitpunkt (6) ein zweites Startsignal (7) auszusenden, das zumindest Information über eine seit dem Hochlaufzeitpunkt (6) vergangene Zeitspanne (50) enthält, die vom ersten Knoten verfolgt wird, und
einen zweiten der Knoten (4, 10), der in der Lage ist, sich mit dem ersten Knoten (5) zu vernetzen, wenn das erste Startsignal (7) innerhalb eines vorbestimmten Zeitfensters (30) ab dem Hochlaufzeitpunkt (6) der gemeinsamen Spannungsquelle (1) empfangen wird, oder wenn das zweite Startsignal (7) nach dem Hochlaufzeitpunkt (6) empfangen wird, wobei eine seit dem Hochlaufzeitpunkt (6) vergangene Zeitspanne (50), die vom zweiten Knoten verfolgt wird, mit der im zweiten Startsignal (7) angezeigten übereinstimmt.

13. System nach Anspruch 12, **dadurch gekennzeichnet, dass** einer der Knoten (4, 10 oder 5) als Master-Knoten ausgewählt ist.

14. System nach Anspruch 12, **dadurch gekennzeichnet, dass** der erste Knoten (5) das erste oder das zweite Startsignal aussendet, bevor von den anderen Knoten Startsignale ausgesandt werden.

15. System nach Anspruch 14, **dadurch gekennzeichnet, dass** der erste Knoten (5) dem Netzwerk eine erste Messung bereitstellt.

16. System nach Anspruch 14, **dadurch gekennzeichnet, dass** der erste Knoten das erste oder zweite Startsignal als Antwort auf einen manuellen Start des Netzwerks sendet.

17. System nach Anspruch 14, **dadurch gekennzeichnet, dass** das zweite Startsignal (7) ein Zufallsstartsignal (7) ist.

18. System nach einem der vorangegangenen Ansprüche, **dadurch gekennzeichnet, dass** der zweite Knoten (4, 10) die Netzwerkadresse des ersten Knotens (5) als seine eigene Netzwerkadresse annimmt.

19. System nach einem der vorangegangenen Ansprüche, **dadurch gekennzeichnet, dass** das System einen weiteren Schritt umfasst, bei dem ein mit einem batteriebetriebenen Knoten vernetzter Knoten (5), der kein Masterknoten ist, beim nächsten Einschalten (6) der gemeinsamen Spannungsquelle zum Masterknoten wird.

20. System nach einem der vorangegangenen Ansprüche, **dadurch gekennzeichnet, dass** das vorbestimmte Zeitfenster (30) ungefähr 1 - 6000 ms, vorzugsweise rund 300 ms, nach dem ersten Startsignal (7) beträgt.

## Revendications

1. Méthode de réseautage incluant les étapes suivantes :
mettre en réseau au moins deux noeuds communiquant sans fil (4, 5, 10) partageant une source de puissance commune (1), **caractérisée en ce que** :
un premier des noeuds (5) envoie un premier signal de départ (12, 13, 7) déclenché par une mise en marche de la source de puissance commune (1) à un temps de mise sous tension (6), ou bien envoie après le temps de mise sous tension (6) un deuxième signal de départ (7) incluant au moins une information indiquant un temps qui s'est écoulé (50) depuis le temps de mise sous tension (6) tel que suivi par le premier noeud, et
un deuxième des noeuds (4, 10) se met en réseau avec le premier noeud (5) si le premier signal de départ (7) est reçu dans une fenêtre de temps prédéfinie (30) depuis le temps de mise sous tension (6) de la source de puissance commune (1), ou bien si le deuxième signal de départ (7) est reçu après le temps de mise sous tension (6), où un temps qui s'est écoulé (50) depuis le temps de mise sous tension (6) tel que suivi par le deuxième noeud correspond à celui indiqué dans le deuxième signal de départ (7).

2. Méthode selon la revendication 1, **caractérisée en ce qu'**un des noeuds (4, 10 ou 5) agit comme noeud maître.

3. Méthode selon la revendication 1, **caractérisée en ce que** le premier noeud (5) émet le premier ou deuxième signal de départ avant que des signaux de départ ne soient émis par les autres noeuds.

4. Méthode selon la revendication 3, **caractérisée en ce que** le premier noeud (5) fournit une première mesure au réseau.

5. Méthode selon la revendication 3, **caractérisée en ce que** le premier noeud envoie le premier ou deuxième signal de départ en réponse à un démarrage manuel du réseau.

6. Méthode selon la revendication 3, **caractérisée en ce que** le deuxième signal de départ (7) est un signal de départ aléatoire (7).

7. Méthode selon l'une quelconque des revendications précédentes, **caractérisée en ce que** le deuxième noeud (4, 10) prend l'adresse réseau du premier noeud (5) comme sa propre adresse réseau.

8. Méthode selon l'une quelconque des revendications précédentes, **caractérisée en ce qu'**elle comprend encore une étape, dans laquelle un noeud non maître (5) en réseau avec un noeud à batterie devient un noeud maître à une prochaine mise en service (6) de la source de puissance commune.

9. Méthode selon l'une quelconque des revendications précédentes, **caractérisée en ce que** la fenêtre de temps prédéfinie (30) est environ de 1 - 6000 ms, de préférence autour de 300 ms après le premier signal de départ (7).

10. Méthode selon l'une quelconque des revendications précédentes, **caractérisée en ce qu'**une fin du premier signal de départ (7) est considérée comme n'importe quel évènement suivant proportionnel au temps lorsque le premier signal de départ actuel (12, 13, 7) est complet.

11. Méthode selon l'une quelconque des revendications précédentes, **caractérisée en ce que** la fenêtre de temps prédéfinie (30) est formée à la fin du premier signal de départ (7).

12. Système de réseautage incluant des moyens pour :
mettre en réseau au moins deux noeuds communiquant sans fil (4, 5, 10) partageant une source de puissance commune (1), **caractérisée en ce qu'**il comprend en outre
un premier des noeuds (5) étant apte à envoyer un premier signal de départ (12, 13, 7) déclenché par une mise en marche de la source de puissance commune (1) à un temps de mise sous tension (6), ou bien envoie après le temps de mise sous tension (6) un deuxième signal de départ (7) incluant au moins une information indiquant un temps qui s'est écoulé (50) depuis le temps de mise sous tension (6) tel que suivi par le premier noeud, et
un deuxième des noeuds (4, 10) étant apte à se mettre en réseau avec le premier noeud (5) si le premier signal de départ (7) est reçu dans une fenêtre de temps prédéfinie (30) depuis le temps de mise sous tension (6) de la source de puissance commune (1), ou bien si le deuxième signal de départ (7) est reçu après le temps de mise sous tension (6), où un temps qui s'est écoulé (50) depuis le temps de mise sous tension (6) tel que suivi par le deuxième noeud correspond à celui indiqué dans le deuxième signal de départ (7).

13. Système selon la revendication 12, **caractérisé en ce qu'**un des noeuds (4, 10 ou 5) est sélectionné comme noeud maître.

14. Système selon la revendication 12, **caractérisé en ce que** le premier noeud (5) envoie le premier ou deuxième signal de départ avant que des signaux de départ ne soient envoyés par les autres noeuds.

15. Système selon la revendication 14, **caractérisé en ce que** le premier noeud (5) fournit une première mesure au réseau.

16. Système selon la revendication 14, **caractérisé en ce que** le premier noeud envoie le premier ou deuxième signal de départ en réponse à un démarrage manuel du réseau.

17. Système selon la revendication 14, **caractérisé en ce que** le deuxième signal de départ (7) est un signal de départ aléatoire (7).

18. Système selon l'une quelconque des revendications précédentes, **caractérisé en ce que** le deuxième noeud (4, 10) prend l'adresse réseau du premier noeud (5) comme sa propre adresse réseau.

19. Système selon l'une quelconque des revendications précédentes, **caractérisé en ce qu'**il comprend des moyens pour encore une étape, où un noeud non maître (5) en réseau avec un noeud à batterie devient un noeud maître à une prochaine mise en service (6) de la source de puissance commune.

20. Système selon l'une quelconque des revendications de système, **caractérisé en ce que** la fenêtre de temps prédéfinie (30) est d'environ 1 - 6000 ms, de préférence d'environ 300 ms après le premier signal de départ (7).
